# EUROPEAN PATENT APPLICATION

(11) **EP 4 682 918 A1**
(43) Date of publication of application: **21.01.2026**
(21) Application number: 25168200.1
(22) Date of filing: 03.04.2025
(51) Int. Cl.: H01F 27/26, H01F 27/28, H02J 7/00, H02M 3/00

(54) **PLANAR TRANSFORMER**

(30) Priority: 16.07.2024 KR 20240093825
(71) Applicant: Hyundai Mobis Co., Ltd., Gangnam-gu Seoul 06141 (KR)
(72) Inventor: PARK, Ji Hoon, 16891 Yongin-si, Gyeonggi-do (KR); HONG, Ye Jin, 16891 Yongin-si, Gyeonggi-do (KR); KEUM, Moon Hwan, 16891 Yongin-si, Gyeonggi-do (KR)
(74) Representative: Jung, Minkyu

(57) **Abstract**

Provided is a planar transformer, and more particularly, a planar transformer including: a plurality of primary coil elements included on a flat plate and laminated together; and a plurality of secondary coil elements included on the flat plate and having an induced current generated by the primary coil elements, wherein the plurality of secondary coil elements are respectively disposed above and below the primary coil element.

## Description

### TECHNICAL FIELD

The following disclosure relates to a planar transformer, and more particularly, to a winding structure of the planar transformer.

### BACKGROUND

A low-voltage DC to DC converter (hereinafter, LDC) applied to an eco-friendly vehicle (a hybrid electric vehicle (HEV), a plug-in hybrid electric vehicle (PHEV), or an electric vehicle (EV)) may be a major component for supplying power to an electrical system in the vehicle from a high-voltage battery. Recently, the LDC has been developed as a product integrated with an on-board charger (OBC) that shares a high voltage to achieve a smaller/lighter electric vehicle. However, a charging capacity of the OBC is required from 11 kW to 22 kW to secure a fast charging speed of the electric vehicle. Accordingly, the LDC within the product having a limited size is required to have improved power density and a reduced size. To meet this demand, a transformer occupying a large volume among LDC circuit components, is being developed as a planar transformer.

The planar transformer may reduce a size of the transformer compared to an existing transformer by implementing transformer windings in a printed circuit board (PCB) pattern. However, the planar transformer may have the following disadvantages. First, common noise of the system may be increased. In detail, as primary and secondary windings of the transformer are replaced with the PCB pattern, a coupling coefficient between the primary and secondary windings may be increased. The increased coupling coefficient may increase a parasitic capacitance (hereinafter, C_iw) component of the transformer, thus causing the increased common noise between the primary (high voltage) winding and the secondary (low voltage) winding. Second, the efficiency of the system may be reduced. The PCB pattern may generally have a smaller current-conducting area than the winding, and the efficiency of the planar transformer may thus be lower than that of a general transformer. In addition, as the coupling coefficient between the primary and secondary windings is increased, a magnitude of a resonant waveform of the leakage inductance and parasitic capacitance of the transformer may be increased to thus increase a root mean square (RMS) of a transformer current, thereby further reducing the efficiency of the system.

### [Related Art Document]

### [Patent Document]

Korean Patent No. 10-2233041 ("Power conversion device and manufacturing method for thereof", registered on March 23, 2021)

### SUMMARY

An embodiment of the present disclosure is directed to providing a planar transformer which may ensure the enhanced efficiency and reduced common noise of a low-voltage DC to DC converter (LDC) system by optimizing a winding structure of the planar transformer.

In one general aspect, provided is a planar transformer including: a plurality of primary coil elements included on a flat plate and laminated together; and a plurality of secondary coil elements included on the flat plate and having an induced current generated by the primary coil elements, wherein the plurality of secondary coil elements are respectively disposed above and below the primary coil element.

In another general aspect, provided is a planar transformer including: a plurality of primary coil elements included on a flat plate and spaced apart from each other; and a plurality of secondary coil elements included on the flat plate and having an induced current generated by the primary coil elements, wherein the secondary coil elements are respectively disposed below the primary coil elements.

The planar transformer may further include insulating sheets respectively disposed between the plurality of primary coil elements and the plurality of secondary coil elements.

The insulating sheet disposed between the primary coil element and the secondary coil element may have a thickness that is twice that of the insulating sheet disposed between one primary coil element and another primary coil element among the primary coil elements.

Thicknesses of copper coil windings wound on the primary coil element and the secondary coil element may be the same as each other.

The planar transformer may further include: an upper core disposed on an uppermost end of the plurality of primary coil elements and the plurality of secondary coil elements laminated together; and a lower core disposed on a lowermost end of the plurality of primary coil elements and the plurality of secondary coil elements laminated together, wherein the upper core includes a left upper core and a right upper core disposed to be spaced apart from each other by a predetermined distance based on a central axis of the plurality of primary coil elements and the plurality of secondary coil elements laminated together, and the lower core includes a left lower core and a right lower core disposed to respectively correspond to the left upper core and the right upper core.

The planar transformer may further include a gap sheet disposed between the lower core and the secondary coil element disposed on a lowermost end of the plurality of secondary coil elements.

Other features and aspects will be apparent from the following detailed description, the drawings, and the claims.

### BRIEF DESCRIPTION OF THE DRAWINGS

FIG. 1 is a circuit diagram showing a low-voltage DC to DC converter (LDC) system.
FIG. 2 is a schematic view showing a laminated structure of a prior planar transformer.
FIG. 3 is a perspective view showing a planar transformer according to an embodiment of the present disclosure.
FIG. 4 is a schematic view showing a laminated structure of the planar transformer according to an embodiment of the present disclosure.
FIG. 5 is a schematic view showing a laminated structure of a planar transformer according to another embodiment of the present disclosure.
FIG. 6 is a schematic view showing a laminated structure of a planar transformer according to still another embodiment of the present disclosure.
FIG. 7 is a schematic view showing a magnetomotive force (MMF) distribution of the structure shown in FIG. 2.
FIG. 8 is a schematic view showing an MMF distribution of the structure shown in FIG. 4.
FIG. 9 is a schematic view showing an MMF distribution of the structure shown in FIG. 5.

### DETAILED DESCRIPTION OF EMBODIMENTS

In order to describe the present disclosure, operational advantages of the present disclosure, and objects accomplished by embodiments of the present disclosure, the embodiments of the present disclosure are hereinafter provided as examples and described with reference to the accompanying drawings.

First, terms used in this application are used only to describe specific embodiments rather than limiting the present disclosure, and a term of a singular number may include its plural number unless explicitly indicated otherwise in the context. In addition, it should be understood that terms "include", "have", and the like used in this application specify the presence of features, numerals, steps, operations, components, parts, or combinations thereof, which are mentioned in the specification, and do not preclude the presence or addition of one or more other features, numerals, steps, operations, components, parts, or combinations thereof.

In describing the present disclosure, omitted is a detailed description of a case where it is decided that the detailed description of the known functions or configurations related to the present disclosure may unnecessarily obscure the gist of the present disclosure.

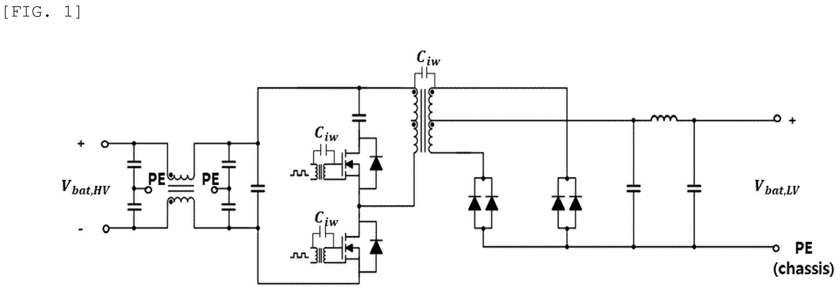

FIG. 1 is a circuit diagram showing a low-voltage DC to DC converter (LDC) system.

As shown in FIG. 1, the LDC system may function to convert a voltage of a high-voltage battery to a low voltage level of about 12 V. Here, a ground of an LDC system output may be the same as that of a vehicle chassis. Therefore, a common noise component flowing through the vehicle chassis may be entirely present within the system. In addition, the common noise may worsen an electromagnetic characteristic inside a vehicle, adversely affect an operation of another product in the vehicle, and weaken an intensity of radio listening.

Meanwhile, in general, the transformer may be essential for electrical insulation between the primary and secondary wirings. However, due to a reason such as coupling between the primary and secondary wirings, a parasitic capacitance C_iw (inter-winding capacitance) component may be present between the primary and secondary wirings of the transformer, and this component may become a path through which the common noise flows. Therefore, in the LDC system, it may be important to reduce the C_iw component in order to reduce the common noise.

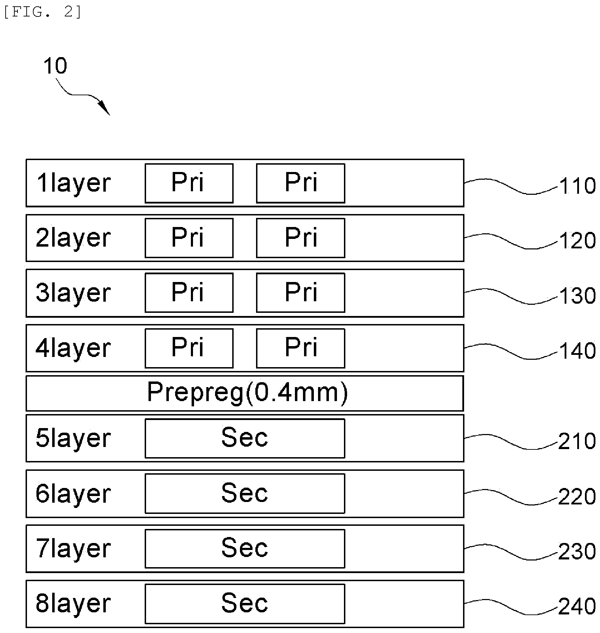

FIG. 2 is a schematic view showing a laminated structure of a prior planar transformer 10.

As shown in FIG. 2, the prior planar transformer 10 may include a plurality of primary printed circuit board (PCB) patterns 110 to 140 disposed on an upper side, and a plurality of secondary PCB patterns 210 to 240 disposed on a lower side. In addition, an insulating sheet (prepreg) may be disposed between respective layers. Here, the insulating sheet may have a thickness of 0.4 mm at a portion where the primary wiring and the secondary wiring are in contact with each other, and the insulating sheet disposed between the same layers may have a thickness of 0.2 mm.

The planar transformer may have parasitic capacitance, PCB thermal resistance, and magnetomotive force (MMF), which vary depending on the laminated structure of the primary and secondary PCB patterns. Here, the parasitic capacitance may indicate the common noise between the primary and secondary wirings, the PCB thermal resistance may indicate heating performance of the transformer PCB pattern, and the magnetomotive force (MMF) may indicate an alternating current (AC) conduction loss of the transformer PCB.

Embodiments of the present disclosure are described and compared with those of the prior art based on the three indicators mentioned above.

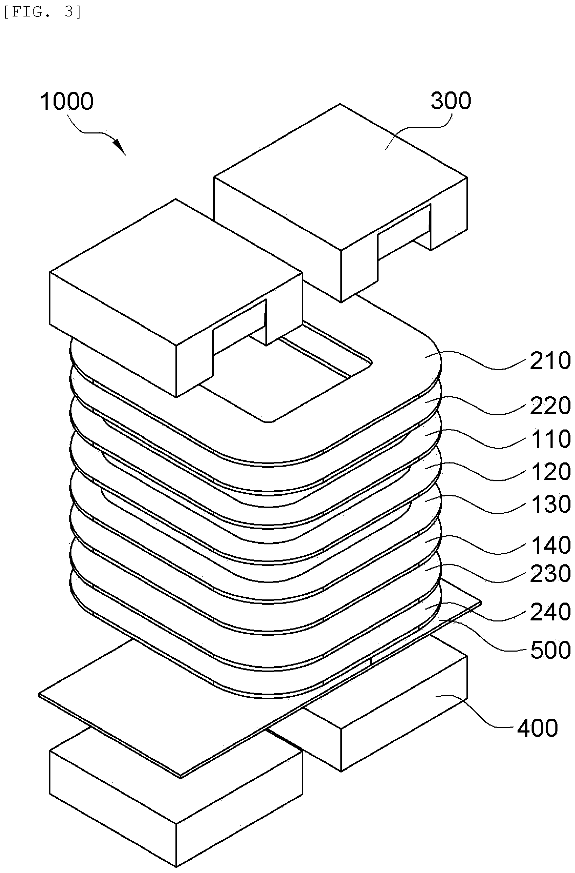

FIG. 3 is a perspective view showing a planar transformer according to an embodiment of the present disclosure.

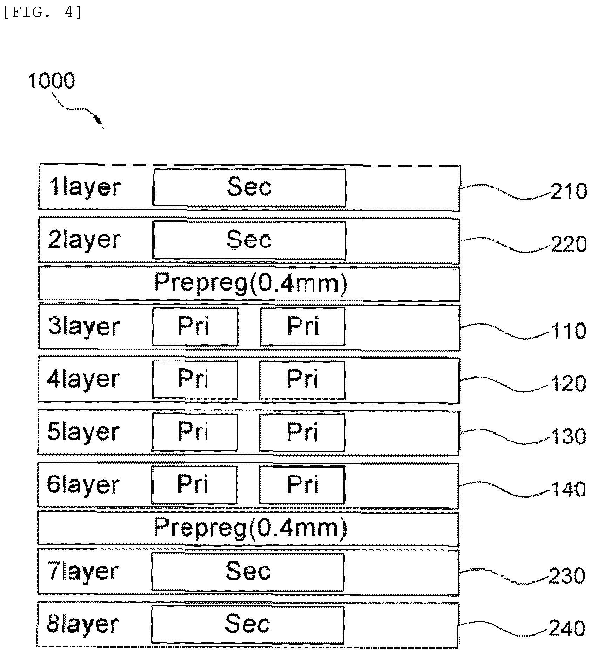

FIG. 4 is a schematic view showing a laminated structure of the planar transformer according to an embodiment of the present disclosure.

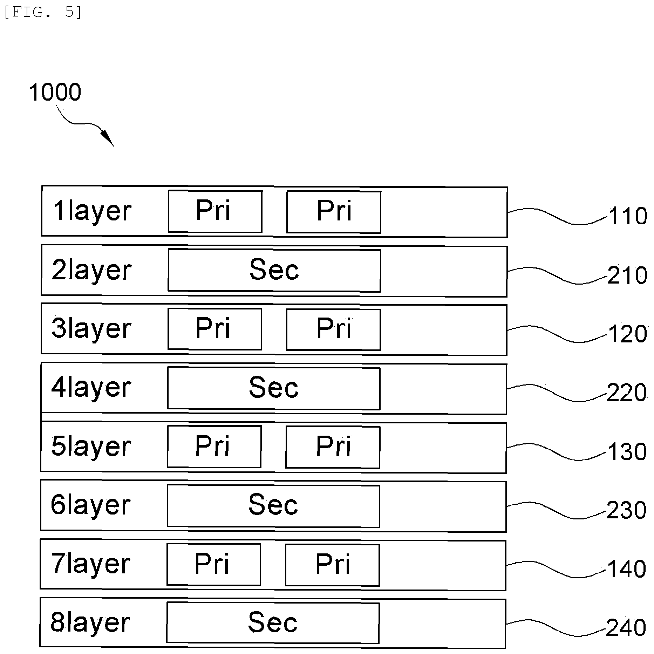

FIG. 5 is a schematic view showing a laminated structure of a planar transformer according to another embodiment of the present disclosure.

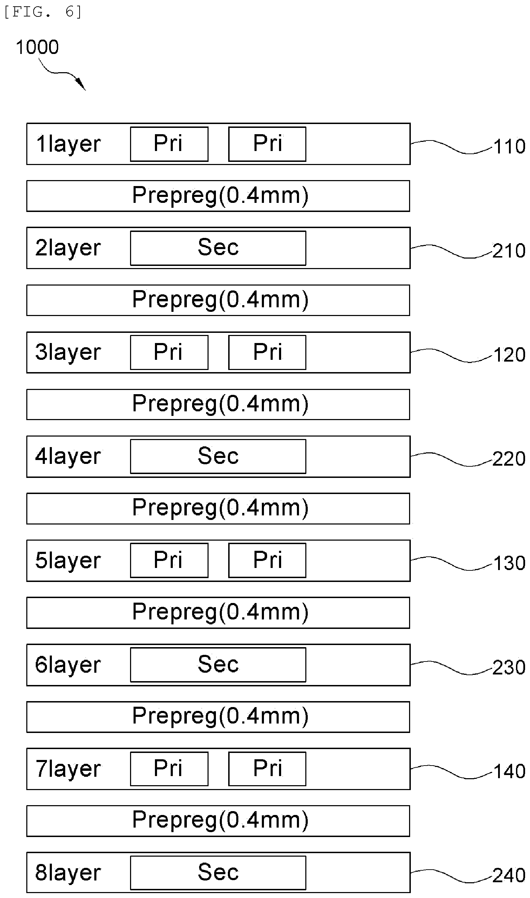

FIG. 6 is a schematic view showing a laminated structure of a planar transformer according to still another embodiment of the present disclosure.

As shown in FIGS. 3 to 6, a planar transformer 1000 according to the present disclosure may include a plurality of primary coil elements 110 to 140 and a plurality of secondary coil elements 210 to 240.

The plurality of primary coil elements 110 to 140 and the plurality of secondary coil elements 210 to 240 mentioned herein may each be included in a flat plate.

In detail, the plurality of primary coil elements 110 to 140 may be laminated together, and the insulating sheets (prepreg) may respectively be disposed between the plurality of primary coil elements 110 to 140.

In addition, the plurality of secondary coil elements 210 to 240 may have an induced current generated by the primary coil elements 110 to 140.

Meanwhile, as shown in FIGS. 3 and 4, the planar transformer 1000 according to an embodiment of the present disclosure may have the plurality of secondary coil elements 210 to 240 disposed above and below the primary coil elements 110 to 140. In addition, the insulating sheet (prepreg) may be disposed between the respective coil elements, and the insulating sheet (prepreg) disposed between one of the primary coil elements 110 to 140 and another of the primary coil elements 110 to 140 may have a thickness of 0.2 mm. In addition, the insulating sheet (prepreg) disposed between one of the secondary coil elements 210 to 240 and another of the secondary coil elements 210 to 240 may have the thickness of 0.2 mm. On the other hand, the insulating sheet (prepreg) disposed between the primary coil elements 110 to 140 and the secondary coil elements 210 to 240 may have a thickness of 0.4 mm. That is, the insulating sheets (prepreg) respectively disposed between the primary coil elements 110 to 140 and the secondary coil elements 210 to 240 may have a thickness twice that of another insulating sheet (prepreg).

In another embodiment described with reference to FIG. 5, the plurality of primary coil elements 110 to 140 may be disposed to be spaced apart from each other. Accordingly, the plurality of secondary coil elements 210 to 240 may each be disposed below the primary coil elements 110 to 140. In addition, the insulating sheet (prepreg) may be disposed between the respective coil elements, and the insulating sheet (prepreg) disposed between one of the primary coil elements 110 to 140 and another of the primary coil elements 110 to 140 may have the thickness of 0.2 mm.

In still another embodiment described with reference to FIG. 6, the plurality of primary coil elements 110 to 140 may be disposed to be spaced apart from each other. Accordingly, the plurality of secondary coil elements 210 to 240 may respectively be disposed below the primary coil elements 110 to 140. In addition, the insulating sheets (prepreg) may respectively be disposed between the coil elements, and the insulating sheets (prepreg) disposed between the primary coil elements 110 to 140 and the secondary coil elements 210 to 240 may each have the thickness of 0.4 mm.

In addition, in all the embodiments described with reference to FIGS. 4 to 6, the thicknesses of copper coil transformer windings may be the same, for example, 2 oz.

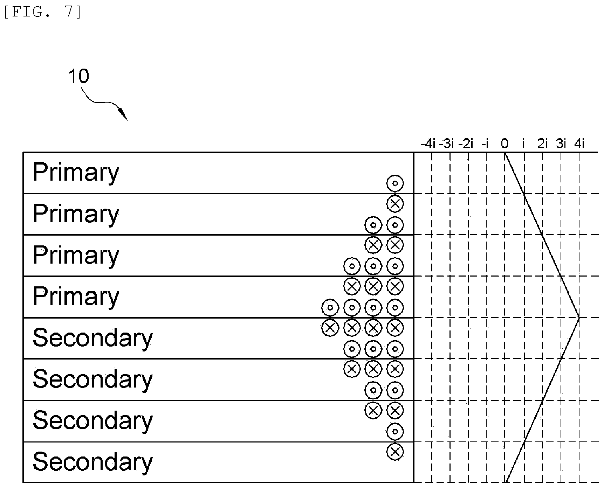

FIG. 7 is a schematic view showing a magnetomotive force (MMF) distribution of the structure shown in FIG. 2.

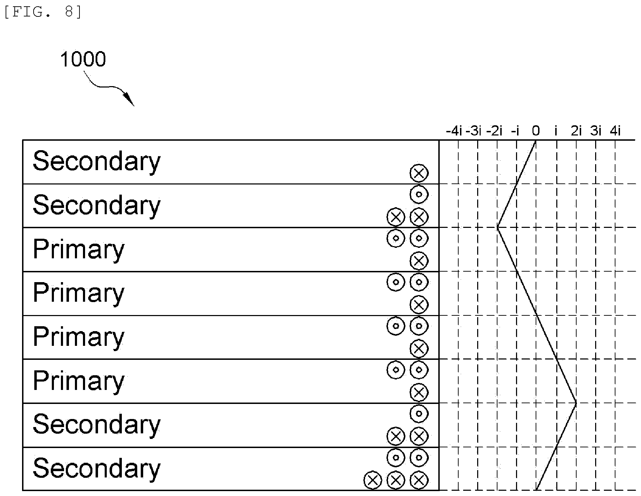

FIG. 8 is a schematic view showing an MMF distribution of the structure shown in FIG. 4.

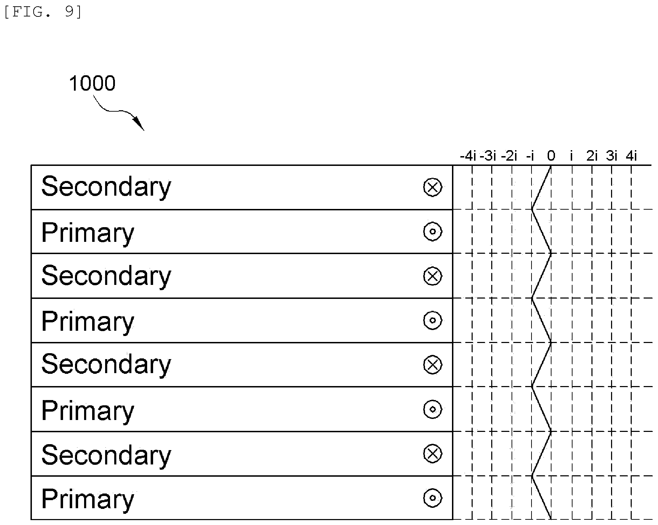

FIG. 9 is a schematic view showing an MMF distribution of the structure shown in FIG. 5.

When examining the PCB thickness, capacitance, thermal resistance, and MMF indices of the laminated structures in FIGS. 7 and 8, the following table shows their results.

| | FIG. 7 | FIG. 8 | FIG. 9 | FIG. 6 |
|---|---|---|---|---|
| PCB thickness | 2.16 mm | 2.36 mm | 1.96 mm | 3.36 mm |
| Capacitance | 256 pF | 512 pF | 3588 pF | 1794 pF |
| Thermal resistance | 1.37°C/W | 1.55°C/W | 1.20°C/W | 2.40°C/W |
| MMF | 4i | 2i | i | i |

When viewing the table above, the embodiment in FIG. 8, which shows the most desirable values in terms of capacitance, thermal resistance, and MMF, may be seen as the most suitable the laminated structure of the PCB for the LDC system. In addition, due to a characteristic of the LDC system, the embodiment in FIG. 8, in which the primary pattern to which a high voltage is applied is moved inside the PCB, may be advantageous in securing its insulation distance from a PCB component or another low-voltage PCB pattern.

Meanwhile, referring back to FIG. 3, the planar transformer 1000 according to the present disclosure may further include an upper core 300 and a lower core 400.

As shown in FIG. 3, the upper core 300 may be disposed on the uppermost end of the plurality of primary coil elements 110 to 140 and the plurality of secondary coil elements 210 to 240, which are laminated together. In detail, the upper core 300 may include a left upper core and a right upper core, and these cores may be disposed to be spaced apart from each other by a predetermined distance based on a central axis of the plurality of primary coil elements 110 to 140 and the plurality of secondary coil elements 210 to 240, which are laminated together.

As shown in FIG. 3, the lower core 400 may be disposed on the lowermost end of the plurality of primary coil elements 110 to 140 and the plurality of secondary coil elements 210 to 240, which are laminated together. In detail, the lower core 400 may include a left lower core and a right lower core, and these cores may be disposed to be spaced apart from each other by a predetermined distance and disposed to respectively correspond to the right upper core and the left upper core, based on the central axis of the plurality of primary coil elements 110 to 140 and the plurality of secondary coil elements 210 to 240, which are laminated together.

In addition, as shown in FIG. 3, the planar transformer 1000 according to the present disclosure may further include a gap sheet 500.

The gap sheet 500 may be disposed between the lower core 400 and the secondary coil element 240 disposed on the lowermost end of the plurality of secondary coil elements 210 to 240.

As set forth above, the planar transformer according to the various embodiments in the present disclosure as mentioned above may enhance the efficiency of the LDC system.

In addition, the planar transformer in the present disclosure may reduce the common noise of the LDC system.

In addition, in this way, the planar transformer may reduce the cost of electromagnetic wave improvement and enhance the power density, thereby reducing the size and volume of the product.

Although the embodiments of the present disclosure are described as above, the embodiments disclosed in the present disclosure are provided to fully describe the present disclosure rather than limiting the spirit of the present disclosure. Therefore, the spirit of the present disclosure may include not only each disclosed embodiment but also a combination of the disclosed embodiments. Further, the scope of the present disclosure is not limited to these embodiments. In addition, it is apparent to those skilled in the art to which the present disclosure pertains that various variations and modifications could be made without departing from the spirit and scope of the appended claims, and all such appropriate variations and modifications should be considered as falling within the scope of the present disclosure as equivalents.

## Claims

1. A planar transformer comprising:
a plurality of primary coil elements included on a flat plate and laminated together; and
a plurality of secondary coil elements included on the flat plate and having an induced current generated by the primary coil elements,
wherein the plurality of secondary coil elements are respectively disposed above and below the primary coil elements.

2. A planar transformer comprising:
a plurality of primary coil elements included on a flat plate and spaced apart from each other; and
a plurality of secondary coil elements included on the flat plate and having an induced current generated by the primary coil elements,
wherein the secondary coil elements are respectively disposed below the primary coil elements.

3. The planar transformer of claim 1 or 2, further comprising insulating sheets disposed between the plurality of primary coil elements and the plurality of secondary coil elements.

4. The planar transformer of claim 3, wherein an insulating sheet disposed between the primary coil elements and the secondary coil element has a thickness that is twice the thickness of another insulating sheet disposed between one primary coil element and another primary coil element among the primary coil elements.

5. The planar transformer of any one of claims 1 to 4, wherein thicknesses of copper coil windings wound on the primary coil elements and the secondary coil elements are the same.

6. The planar transformer of claim 2, further comprising:
an upper core assembly disposed on an uppermost end of the plurality of primary coil elements and the plurality of secondary coil elements laminated together; and
a lower core assembly disposed on a lowermost end of the plurality of primary coil elements and the plurality of secondary coil elements laminated together,
wherein the upper core assembly includes a left upper core and a right upper core disposed to be spaced apart from each other by a predetermined distance based on a central axis of the plurality of primary coil elements and the plurality of secondary coil elements laminated together, and
the lower core assembly includes a left lower core and a right lower core disposed to respectively correspond to the left upper core and the right upper core.

7. The planar transformer of claim 6, further comprising a gap sheet disposed between the lower core assembly and one of the plurality of the secondary coil elements disposed on a lowermost end of the plurality of secondary coil elements.
